Europäisches Patentamt

European Patent Office

Office européen des brevets

(11) Veröffentlichungsnummer: **0 259 764 B1**

# EUROPÄISCHE PATENTSCHRIFT

(45) Veröffentlichungstag der Patentschrift: **11.12.91**

(51) Int. Cl.⁵: **H02P 6/02**

(21) Anmeldenummer: **87112766.8**

(22) Anmeldetag: **02.09.87**

Verbunden mit 87905746.1/0279839
(europäische
Anmeldenummer/Veröffentlichungsnummer)
durch Entscheidung vom 16.10.91.

(54) **Schaltungsanordnung zur elektronischen Kommutierung eines Gleichstrommotors.**

(30) Priorität: **05.09.86 DE 3630312**

(43) Veröffentlichungstag der Anmeldung:
**16.03.88 Patentblatt 88/11**

(45) Bekanntmachung des Hinweises auf die
Patenterteilung:
**11.12.91 Patentblatt 91/50**

(84) Benannte Vertragsstaaten:
**AT BE CH DE ES FR GB IT LI NL SE**

(56) Entgegenhaltungen:
**EP-A- 0 001 648**
**WO-A-86/02212**
**US-A- 4 118 129**
**US-A- 4 360 769**

**IBM TECHNICAL DISCLOSURE BULLETIN,**
**Band 16, Nr. 11, April 1974, Seiten 3543-3545,**
**New York, US; D.G. ABRAHAM et al.: "Two**
**loop error monitoring system used with digi-**
**tal positioning devices"**

(73) Patentinhaber: **Deutsche Thomson-Brandt
GmbH**
**Hermann-Schwer-Strasse 3 Postfach 1307**
**W-7730 Villingen-Schwenningen(DE)**

(72) Erfinder: **Gleim, Günter**
**Oberer Sonnenbühl 22**
**W-7730 VS-Villingen 22(DE)**

**Beschreibung**

Die Erfindung betrifft eine Schaltungsanordnung zur elektronischen Kommutierung eines mehrsträngigen Gleichstrommotors mit auf dem Umfang eines Rotors angeordneten Marken, die in Zusammenwirken mit einem Sensor die Kommutierungsimpulse zur Ansteuerung der Stränge des Motors liefern, indem die vom Sensor gelieferten Impulse einen Zähler weiterschalten, dessen Ausgänge Schalter ansteuern, welche die Stränge abwechselnd auf ein Betriebs- oder ein Bezugspotential schalten, wobei der Zähler nach einer Anzahl von Impulsen sich selbst zurücksetzt. Eine derartige Schaltungsanordnung ist bekannt und z.B. in der DE-OS 34 35 270 beschrieben. Sie dient dazu, die verschiedenen Stränge des Motors im richtigen Moment anzusteuern. Die am Umfang des Rotors angebrachten Marken können lichtdurchlässige oder reflektierende Stellen sein, die mit einem lichtempfindlichen Sensor zusammenwirken oder es kann sich bei den Marken um Permanentmagnete handeln, die auf einen Hallgenerator als Sensor einwirken. Die am Umfang des Rotors angeordneten Marken erzeugen eine periodisch auftretende Sequenz der Ansteuerung der Stränge, indem ein Zähler diese über bipolare Schalter zyklisch entweder mit einem Betriebspotential oder mit einem Bezugspotential verbindet. Die Sequenz wird gebildet, indem der Zähler jeweils nach einer Anzahl von durch die Marken abgegebenen Impulsen sich selbst zurücksetzt, wobei die Zahl der Impulse durch einen ganzzahligen Teiler der Anzahl der Marken gebildet wird.

In der Patentanmeldung WO-A-8 602 212 wird eine Schaltungsanordnung beschrieben, die zur elektrischen Kommutierung eines mehrsträngigen Gleichstrommotors mit mehreren auf dem Umfang eines Rotors angeordneten zur Kommutierung dienenden Marken M, die in Zusammenwirken mit einem Sensor die Kommutierungsimpulse zur Ansteuerung der Stränge des Motors liefern, indem die vom Sensor erzeugten Signale einer Auswerteschaltung zugeführt werden, deren Ausgänge Schalter ansteuern, welche die Stränge des Motors auf Betriebspotential und Bezugspotential schalten. Der dort beschriebenen Schaltungsanordnung liegt die Aufgabe zugrunde, den Rotor immer in die Solldrehrichtung zu zwingen, auch wenn er sich bei der Inbetriebsetzung einmal in falscher Richtung dreht.

Die US-A-4,360,769 zeigt eine Anordnung mit einem Zähler, der von einer auf der Achse eines Motors angetriebenen Scheibe Zählimpulse erhält, die von auf der Scheibe angebrachten Marken über einen Sensor erzeugt werden. Weiter ist eine besondere Marke vorgesehen, die durch einen zweiten Sensor abgetastet wird, dessen Ausgangssignal den Zähler zurücksetzt. Die Anordnung dient dem Zweck zur Positionierung der Antriebswelle. Dazu wird ein Zählerstand voreingestellt, nachdem er durch die besondere Marke zurückgesetzt worden ist. Die abgegebenen Impulse werden gezählt und bei Erreichen des eingestellten Zählerstandes wird der Antrieb des Motors angehalten. Dieser bekannten Anordnung liegt demnach die Aufgabe zugrunde, die Welle eines Motors an einer ganz bestimmten Stelle anzuhalten. Die Markierungen auf der Scheibe dienen nicht zur Kommutierung des Motors, sondern zur Erzeugung von Zählimpulsen.

Bei dem der Anmeldung zugrundeliegenden Problem kann es vorkommen, daß die Rücksetzung des Zählers, der zur Erzeugung der Kommutierungsimpulse dient, z.B. um einen Impuls zu früh oder zu spät erfolgt, so daß eine optimale Ansteuerung der Stränge nicht mehr gegeben ist. Das heißt es ergibt sich nicht die Bildung eines optimalen Drehmomentes, so daß der Wirkungsgrad des Motors verschlechtert wird.

Der Erfindung liegt die Aufgabe zugrunde, daß der Motor stets das optimale Drehmoment abgibt.

Diese Aufgabe wird durch die im kennzeichnenden Teil von Anspruch 1 angegebene Erfindung gelöst. Weitere Ausgestaltungen zur Lösung der Aufgabe ergeben sich aus den Unteransprüchen.

Nachstehend wird die Erfindung an dem Beispiel eines Kopftrommelmotors für einen Videorekorder beschrieben.

Figur 1 zeigt die Schaltung zur elektronischen Kommutierung.

Figur 2, 3, und 4 zeigen Diagramme zur Erläuterung der Figur 1.

Figur 5 zeigt verschiedene Anordnungen zur Lösung der Aufgabe der Erfindung.

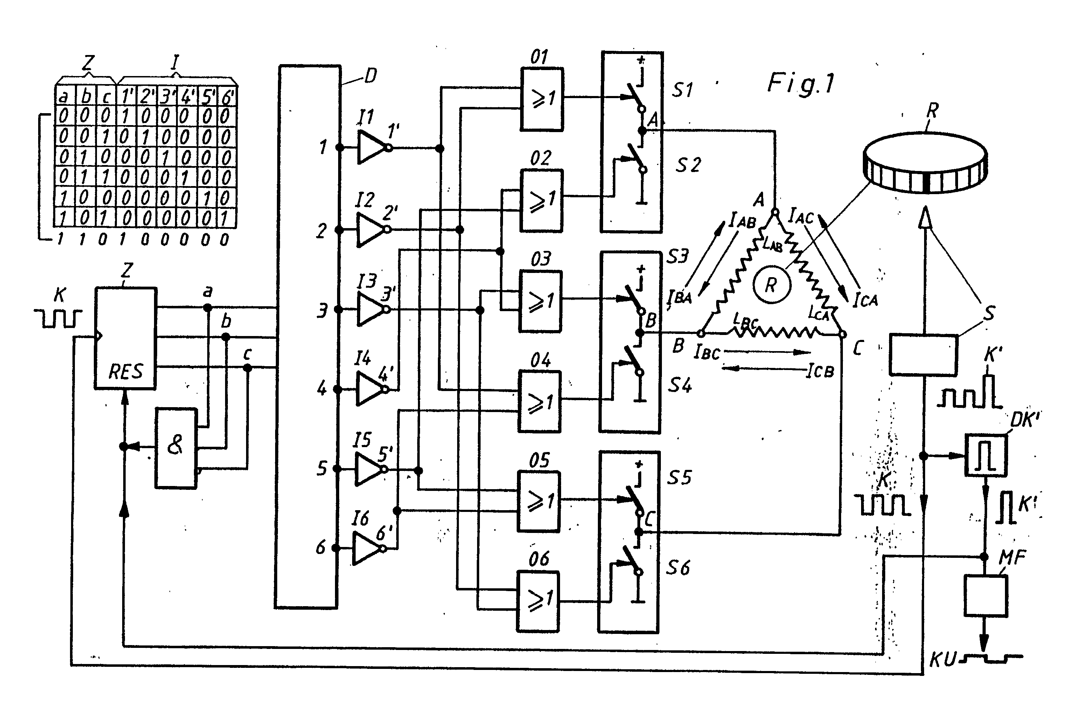

In Figur 1 wird die Erfindung beispielsweise an einer Schaltung zur Kommutierung eines Kopftrommelmotors in einem Videorekorder erläutert. Dieser Motor besitzt im gezeichneten Beispiel im Stator drei Wicklungsstränge $L_{AB}$; $L_{BC}$ UND $L_{CA}$, die den Rotor R antreiben, indem die in den Strängen fließenden Ströme magnetisch auf am Rotor angebrachte Permanentmagnete einwirken. Der Rotor R ist mit Marken M versehen, die zur Kommutierung des Motors dienen, indem diese Marken mit einem Sensor S in Beziehung stehen, der die Marken detektiert und aus ihnen Kommutierungsimpulse K ableitet. Die Marken M können aus kleinen Magneten bestehen, die mit einem Hallgenerator als Sensor zusammenwirken. Die Marken M können auch aus lichtdurchlässigen oder reflektierenden Stellen bestehen, die mit einem optischen Abtaster oder einer Lichtschranke zusammenwirken. Die Marken können auch aus Magneten bestehen, die mit einem magnetischen Widerstand zusammenwirken. Die Kommutierungsimpulse K gelangen an den Eingang eines Zählers Z, der sich nach einer Anzahl von Eingangsimpulsen selbst zurücksetzt. Das geschieht mit Hilfe einer Logikschaltung L, die aus einer gewünschten Endstellung des Zählers einen Rücksetzimpuls formt. Die Anzahl x der Zählimpulse zur Rücksetzung des Zählers Z entspricht dabei einem ganzzahligen Teiler der Anzahl N der auf dem Rotor R angeordneten Marken M. Im Beispiel dienen 24 Marken M zur Kommutierung des Motors. Bei dem Zähler Z handelt es sich z.B. um einen synchronen BCD-Zähler der Type SN 74192 der Firma Texas Instruments. Für x gleich 6 wird der Zähler Z jeweils nach sechs Eingangsimpulsen, d.h. bei Eintreffen des siebten Impulses zurückgesetzt. Die Ausgänge des Zählers Z gelangen auf eine Decoderschaltung D (z.B. der Type 74/54 Texas Instruments), die auf seine Ausgänge 1 bis 6 in zyklischer Reihenfolge jeweils einen Impuls legt, sobald ein Kommutierungsimpuls K an den Eingang des Zählers Z gelangt. Die Ausgänge 1 bis 6 der Decoderschaltung D sind über Inverterstufen I1 bis I6 und über Oder-Gatter 01 bis 06 derart verknüpft, daß deren Ausgänge Schalter S1 bis S6 in der Weise steuern, daß die erforderlichen Ströme in den Strängen $L_{AB}$, $L_{BC}$ und $L_{CA}$ fließen.

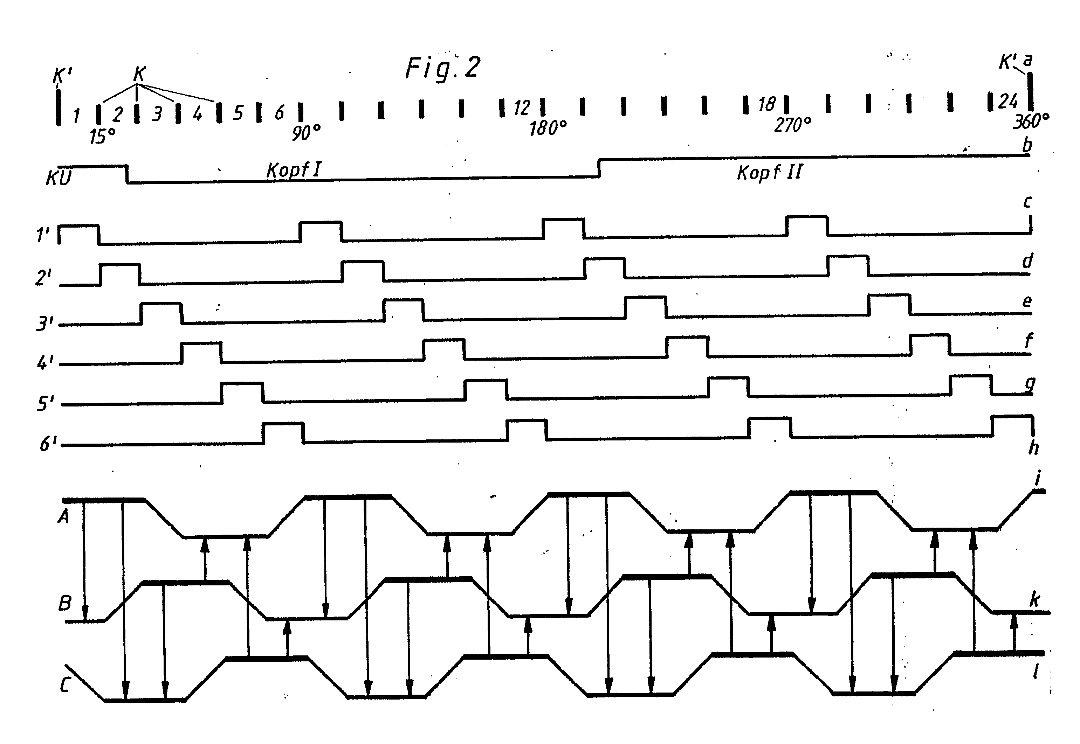

In Figur 2 ist ein Diagramm aufgezeichnet, in welchem die zeitliche Zuordnung der Spannungen zueinander an den Punkten A, B, und C hervorgeht. In Figur 2a ist die vom Sensor S abgegebene Impulsreihe während der Dauer einer Umdrehung des Rotors R aufgetragen. Sie besteht aus 24 Kommutierungsimpulsen K, die 24 Takte bilden. Ein Impulse K' der Impulsreihe dient zur Bildung des Kopfumschaltimpulses KU nach Figur 2b, z.B. mit Hilfe einer monostabilen Kippschaltung MF.

Die Impulse nach Figur 2c bis 2h zeigen die durch die Inverter I1 bis I6 invertierten Ausgangssignale der Decoderausgänge 1 bis 6. In den Reihen Figur 2i, k und l sind die sich an den in Figur 1 mit A, B, und C gekennzeichneten Punkten ergebenden Spannungen angegeben.

Beim ersten Takt wird der Ausgang A durch Schließen des Schalters S1 auf positives Potential gelegt und Ausgang C durch Schließen des Schalters S4 mit Bezugspotential verbunden, so daß ein Strom $I_{AB}$ fließt. Im zweiten Takt fließt der Strom $I_{AC}$ durch Schließen der Schalter S1 und S6. Durch zyklisches Weiterschalten der Ausgänge 3 bis 6 fließen entsprechend die Ströme $I_{BC}$, $L_{BA}$ und $I_{CB}$, worauf die Sequenz 1 bis 6 wiederholt wird. Die Schalter S1 bis S6 sind der Einfachheit wegen als mechanische Schalter dargestellt. Es handelt sich bei diesen selbstverständlich um elektronische Schalter wie z.B. Transistoren oder um geschaltete Stromquellen.

Nun kann es vorkommen, daß der Zähler trotz korrekter Drehrichtung des Motors einen Takt zu früh oder zu spät zurückgesetzt wird.Dadurch werden nicht die richtigen Stränge $L_{AB}$, $L_{BC}$ oder $L_{CA}$

mit Strom beaufschlagt, so daß sich kein optimales Drehmoment ausbilden kann.

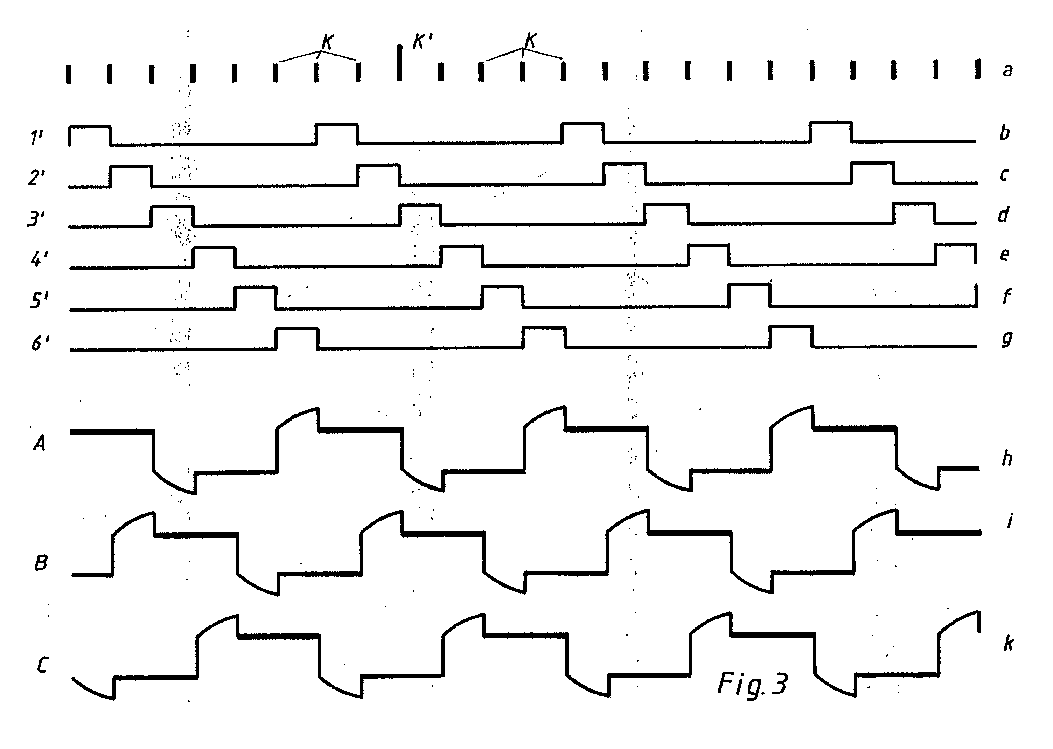

In Figur 3 ist dargestellt, wie sich eine solche ungünstige Rücksetzung des Zählers auswirkt. An den Ausgängen 1' bis 6' der Inverterstufen I1 bis I6 liegen dann Impulse nach Figur 3b bis 3g in bezug auf die Impulse nach Figur 3a um einen Takt verschoben. Er ergeben sich dadurch an den Punkten A, B und C der Schaltung nach Figur 1 nicht die für ein optimales Drehmoment erforderlichen zeitlichen Ansteuerspannungen nach Figur 3h bis 3k.

Die Darstellungen der an den Strängen sich ergebenden Spannungen sind Abbildungen von Oszillogrammen. Die Spannungen gemäß Figur 2 ergeben sich bei einem optimalen Drehmoment, die Spannungen gemäß Figur 3 und teilweise Figur 4 ergeben sich dadurch, daß infolge der Stromansteuerung der Stränge Rückwirkungen des Rotors auf die Induktivität der Stränge entstehen, so daß sich das dargestellte verzerrte Spannungssignal ergibt.

In Figur 4 ist dargestellt, wie sich die Erfindung auswirkt.

Zum Zeitpunkt to beginnt sich der Motor zu drehen, so daß die erste am Sensor S vorbeilaufende Marke M einen ersten Kommutierungsimpuls K abgibt, der den Zähler Z weiterschaltet. Die Ausgangssignal 1' bis 6' an den Invertern I1 bis I6 sind in Figur 4b bis 4g aufgetragen. Bis zum Zeitpunkt $t_1$ ergeben sich die gleichen Verhältnisse wie diejenigen nach Figur 3. Ab Zeitpunkt $t_1$ wird der Zähler Z zwangsläufig zurückgesetzt, so daß die zunächst ungeeignete Ansteuerung nach Figur 4a, 4i und 4k ab diesem Zeitpunkt in die gewünschte übergeht. Dieser Zustand wird nach maximal einer Umdrehung des Motors erreicht.

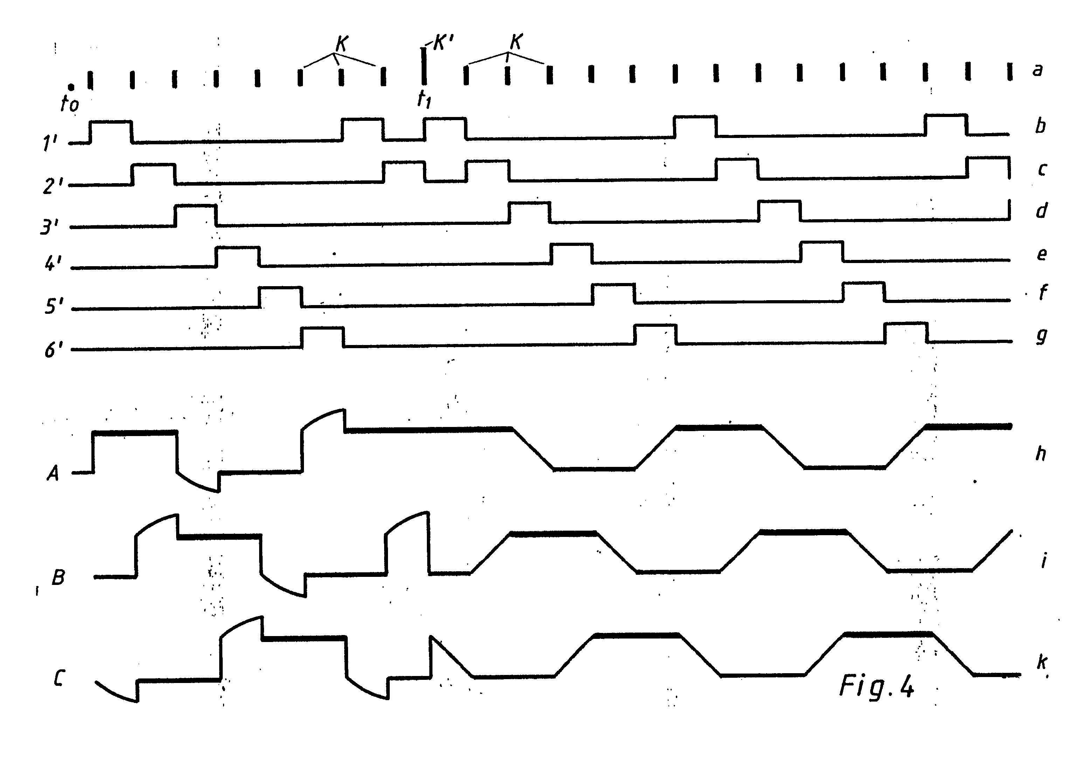

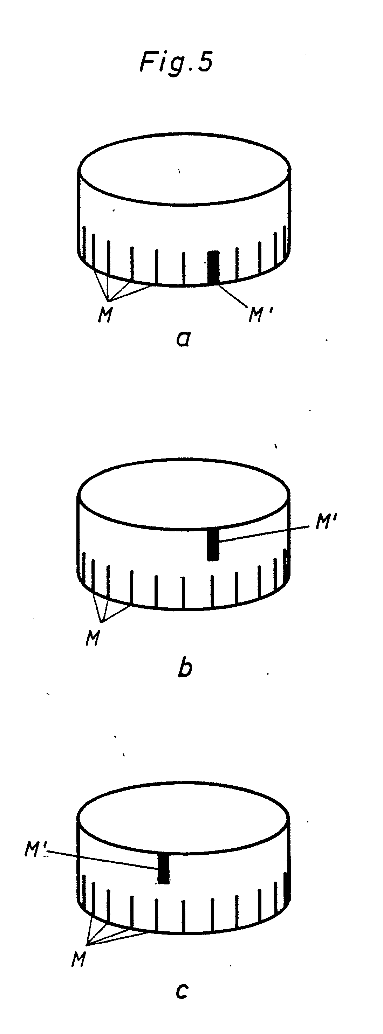

In Figur 5 sind drei verschiedene Möglichkeiten der Anordnung der zusätzlichen Marke M' dargestellt. In Figur 5a ist die besondere Marke M' identisch mit der Marke zur Erzeugung der Kopfumschaltimpulse. In Figur 5b ist die besondere Marke M' in einer zweiten Reihe außerhalb der Kommutierungsmarken M angeordnet. Die besondere Marke M' kann auch zwischen den Kommutierungsmarken M liegen, wie dies in Figur 5c angedeutet ist. In diesem Fall dient sie zur Erzeugung eines Vorbereitungssignals für die Rücksetzung des Zählers Z, die von einem zeitlichen nachfolgenden Kommutierungsimpuls vorgenommen wird. Es ist auch möglich nur einen Teil der Marken zur Kommutierung des Motors heranzuziehen.

**Patentansprüche**

1. Schaltungsanordnung zur elektronischen Kommutierung eines mehrsträngigen Gleichstrommotors mit N auf dem Umfang seines Rotors angeordneten zur Kommutierung dienenden Marken M, die in Zusammenwirken mit einem Sensor die Kommutierungsimpulse zur Ansteuerung der Stränge des Motors liefern, indem die vom Sensor erzeugten Impulse einen Zähler weiterschalten, dessen Ausgänge Schalter ansteuern, welche die Stränge auf ein Betriebs- oder Bezugspotential schalten, wobei der Zähler nach K Impulsen sich selbst zurücksetzt und K ein ganzzahliger Teiler der Zahl N ist,
**dadurch gekennzeichnet, daß**
zur Erzeugung eines optimalen Drehmomentes des Motors eine besondere Marke (M') vorgesehen ist, welche den Zähler (Z) zurücksetzt.

2. Schaltungsanordnung nach Anspruch 1,
**dadurch gekennzeichnet, daß**
die besondere Marke (M') außerhalb der zur Kommutierung dienenden Marken (M) angeordnet ist.

3. Schaltungsanordnung nach Anspruch 1 oder 2,
**dadurch gekennzeichnet, daß**
die Winkellage der besonderen Marke (M') mit der Winkellage einer der N Marken (M) übereinstimmt.

4. Schaltungsanordnung nach Anspruch 1, 2 oder 3,
**dadurch gekennzeichnet, daß**
die besondere Marke (M') an beliebiger Stelle in bezug auf die N Marken (M) angeordnet ist und zur Vorbereitung des zusätzlichen Rücksetzimpulses für den Zähler (Z) dient, der durch die nächstfolgende Marke der N Marken (M) erzeugt wird.

5. Schaltungsanordnung nach Anspruch 1, 2, 3 oder 4,
**dadurch gekennzeichnet, daß**
der Gleichstrommotor den Kopftrommelmotor eines Videorekorders bildet.

6. Schaltungsanordnung nach Anspruch 5,
**dadurch gekennzeichnet, daß**
von der besonderen Marke (M') das Kopfumschaltsignal (KU) abgeleitet wird.

## Claims

1. Circuit arrangement for electronic commutation of a multiphase direct current (d.c.) motor with N marks M serving for the commutation and arranged on the circumference of a rotor which, in collaboration with a sensor, supply the commutation impulses for triggering the phases of the motor, in that the impulses generated by the sensor commutate a counter whose outputs trigger switches which switch the phases to an operating or a reference potential, whereby the counter resets itself after K impulses and K is a whole number divider of the number N, **characterized in that** a special mark (M'), which resets the counter (Z), is provided for generating an optimum torque for the motor.

2. Circuit arrangement according to claim 1, **characterized in that** the special mark (M') is arranged outside the marks (M) which serve for the commutation.

3. Circuit arrangement according to claim 1 or 2, **characterized in that** the angular position of the special mark (M') coincides with the angular position of one of the N marks (M).

4. Circuit arrangement according to claim 1, 2 or 3, **characterized in that** the special mark (M') is arranged at any position with respect to the N marks (M) and serves for preparing the additional reset impulse for the counter (Z) which is generated by the next following mark of the N marks (M).

5. Circuit arrangement according to claim 1, 2, 3 or 4, **characterized in that** the direct current motor forms the head cylinder motor of a video recorder.

6. Circuit arrangement according to claim 5, **characterized in that** the head change-over signal (KU) is derived from the special mark (M').

## Revendications

1. Dispositif de commutation pour la commutation électronique d'un moteur à courant continu à plusieurs branches avec N marques M, placées à la périphérie de son rotor, qui servent à la commutation et qui, en coopérant avec un détecteur, délivrent les impulsions de commutation pour l'excitation des branches du moteur, les impulsions délivrées par le détecteur mettant en commutation un compteur dont les sorties excitent des commutateurs qui commutent les branches en alternance sur un potentiel de service ou un potentiel de référence, le compteur se remettant lui-même à l'état initial après K impulsions et K étant un diviseur entier du nombre N, **caractérisé en ce** qu'une marque particulière (M') est prévue pour générer un couple de rotation optimal du moteur, marque qui remet le compteur (Z) à l'état initial.

2. Dispositif de commutation selon la revendication 1,
   **caractérisé en ce**
   que la marque particulière (M') est placée à l'extérieur des marques (M) qui servent à la commutation.

3. Dispositif de commutation selon la revendication 1 ou 2,
   **caractérisé en ce**
   que la position angulaire de la marque particulière (M') coïncide avec la position angulaire d'une des N marques (N).

4. Dispositif de commutation selon la revendication 1, 2 ou 3,
   **caractérisé en ce**
   que la marque particulière (M') est placée à nimporte quel endroit par rapport aux N marques (M) et qu'elle sert à préparer l'impulsion supplémentaire de remise à l'état initial pour le compteur (Z) qui est produite par la marque qui suit immédiatement parmi les N marques (M).

5. Dispositif de commutation selon la revendication 1, 2, 3 ou 4,
   **caractérisée en ce**
   que le moteur à courant continu constitue le moteur du tambour des têtes d'un magnétoscope.

6. Dispositif de commutation selon la revendication 5,
   **caractérisée en ce**
   que le signal de commutation de la tête (KU) est dérivé de la marque particulière (M').

EP 0 259 764 B1

**Fig.1**

| Z | | | I | | | | | |
|---|---|---|---|---|---|---|---|---|
| a | b | c | 1' | 2' | 3' | 4' | 5' | 6' |
| 0 | 0 | 0 | 1 | 1 | 0 | 0 | 0 | 0 |
| 0 | 0 | 1 | 0 | 1 | 0 | 0 | 0 | 0 |
| 0 | 1 | 0 | 0 | 0 | 1 | 0 | 0 | 0 |
| 0 | 1 | 1 | 0 | 0 | 0 | 1 | 0 | 0 |
| 1 | 0 | 0 | 0 | 0 | 0 | 0 | 1 | 0 |
| 1 | 0 | 1 | 0 | 0 | 0 | 0 | 0 | 1 |
| 1 | 1 | 0 | 1 | 0 | 0 | 0 | 0 | 0 |

D

Z

K

RES

&

I1 1'
I2 2'
I3 3'
I4 4'
I5 5'
I6 6'

a
b
c

1 2 3 4 5 6

01 02 03 04 05 06
$\geq 1$

S1 S2 S3 S4 S5 S6

A B C

R

$I_{AB}$ $I_{AC}$
$L_{AB}$
$I_{BA}$ $I_{CA}$
$L_{BC}$ $L_{CA}$
$I_{BC}$ $I_{CB}$

S
K'
DK'
K'
K
MF
KU

Fig.2

Fig.3

Fig.4

EP 0 259 764 B1

Fig.5

a

b

c